# EUROPÄISCHE PATENTSCHRIFT

(11) **EP 1 334 062 B1**
(45) Veröffentlichungstag und Bekanntmachung des Hinweises auf die Patenterteilung: **04.04.2012**
(21) Anmeldenummer: 01969632.7
(22) Anmeldetag: 23.08.2001
(51) Int. Cl.: C01B 15/023, C07B 35/02

(54) **KONTINUIERLICHES VERFAHREN ZUR HYDRIERUNG**
CONTINUOUS METHOD OF HYDROGENATION
PROCEDE CONTINU D'HYDROGENATION

(30) Priorität: 21.10.2000 DE 10052323
(43) Veröffentlichungstag der Anmeldung: 13.08.2003
(73) Patentinhaber: Evonik Degussa GmbH, 45128 Essen (DE)
(72) Erfinder: KORL, Peter, A-9710 Neu-Feffernitz (AT); MAURER, Bernhard, A-9710 Feistritz/Drau (AT)
(86) Internationale Anmeldenummer: PCT/EP2001/009722
(87) Internationale Veröffentlichungsnummer: WO 2002/034668

(56) Entgegenhaltungen:
- EP-A- 0 111 133
- WO-A-86/06710
- DE-A- 19 808 385
- DE-A- 19 841 843
- US-A- 4 428 922
- US-A- 5 071 634
- US-A- 5 147 628

## Beschreibung

Die vorliegende Erfindung betrifft ein kontinuierliches Verfahren zur katalytischen Hydrierung, bei der der im Reaktionsgemisch suspendierte Hydrierkatalysator im Kreislauf geführt wird. Dieses Verfahren ist insbesondere für den Hydrierungsschritt im Anthrachinonverfahren zur Herstellung von Wasserstoffperoxid geeignet.

Bei bekannten Hydrierungsverfahren wird der Katalysator im allgemeinen als Festbett-, als Träger- oder Suspensionskatalysator eingesetzt.

Beim Festbettreaktor ist der Katalysator auf einem Träger aufgebracht. Ein großer Nachteil dieses Reaktortypes ist der langsame Transfer des gasförmigen Wasserstoffes in die Lösung und weiter zur Katalysatoroberfläche.

Es wurden verschiedene Möglichkeiten vorgeschlagen, den Wasserstoff rascher in Lösung zu bringen. US-Patent 2 837 411 beschreibt das Sättigen der Lösung mit wasserstoff vor der Hydrierung in einem separaten Tank. Erhebliche Investitionskosten und die Tatsache, dass nur ein Bruchteil des in der Reaktion benötigten Wasserstoffes in Lösung gebracht werden kann, machen diesen Weg unattraktiv.

Auch die Vorvermischung des Wasserstoffes mit zu hydrierender Lösung mittels eines statischen Mischers wie im US-Patent 4 428 922 beschrieben, führt nur zu einer geringfügigen Verbesserung, da die Wasserstoffbläschen beim Kontakt mit den Einbauten des Reaktors koaleszieren.

Bei Verwendung eines Träger- oder Suspensionskatalysators wie in EP-A-111 133 beschrieben, treten diese Nachteile nicht auf.

In EP-A-111 133 wird gezeigt, dass sich in einem kontinuierlichen Gleichstromverfahren zur katalytischen Hydrierung zur Herstellung von Wasserstoffperoxid im sogenannten Anthrachinonverfahren die Effizienz der Hydrierung erhöhen läßt, wenn diese in einem Schlaufenreaktor bei Strömungsgeschwindigkeiten von mehr als 3 m/s, bevorzugt 4 - 7 m/s, durchgeführt wird. Die Strömungsgeschwindigkeit ist so gewählt, daß die Phasengrenzfläche gasförmig/flüssig so bleibt, wie sie am Anfang des Reaktors erzeugt wird. Dadurch wird gewährleistet, das sich der Wasserstoff entlang der Reaktionsstrecke vollständig umsetzen kann und es zu keinerlei Trennungen zwischen Gas- und Flüssigphase kommt.

Nachteilig bei diesem in EP-A-111 133 beschriebenen Verfahren ist, dass die Mischorgane für die zu hydrierende Substanz und den Wasserstoff, insbesondere dann, wenn Rohrreaktoren bei den angegebenen hohen Umwälzflüssen und Umwälzgeschwindigkeiten zu betreiben sind, zu hohen Druckverlusten führen und deshalb ein höherer Energieeintrag notwendig ist.

DE-A-198 08 385 beschreibt eine Suspensionshydrierung einer Arbeitslösung in einem Anthrachinonverfahren, bei der das Reaktionsgemisch mit suspendiertem Hydrierkatalysator im Kreislauf geführt wird. Ein Teil des Hydrierungsprodukts wird dem Reaktor entnommen und zu hydrierende Arbeitslösung und Wasserstoff werden dem Reaktor zugeführt. Die im Kreislauf geführte Suspension wird vor dem Eintritt in den Reaktor mit Wasserstoff vermischt.

Aufgabe der vorliegenden Erfindung war es deshalb, die Effizienz eines Hydrierverfahrens, bei der ein Reaktionsgemisch, das die zu hydrierende Substanz, das Hydrierungsprodukt, Wasserstoff und den im Reaktionsgemisch suspendierten Katalysator enthält, im Kreislauf geführt wird, ein Teil des Hydrierungsproduktes dem Reaktor entnommen wird und die zu hydrierende Substanz und Wasserstoff der Reaktion zugeführt wird, zu erhöhen.

Die Aufgabe wird dadurch gelöst, dass die zu hydrierende Substanz, das Hydrierungsprodukt, Wasserstoff und der im Reaktionsgemisch suspendierte Hydrierkatalysator in einem Reaktor im Kreislauf geführt werden, ein Teil des Hydrierungsproduktes dem Reaktor entnommen wird, und die zu hydrierende Substanz und der Wasserstoff dem Reaktor zugeführt werden, wobei man eine katalysatorfreie die zu hydrierende Substanz enthaltende Flüssigphase vor dem Eintritt in den Reaktor mit Wasserstoff vermischt und dieses Gemisch in das katalysatorhaltige Reaktionsgemisch einspeist.

Dadurch vermindert sich der Druckverlust im Hydrierreaktor ganz wesentlich, was zu einer Reduzierung der Energiekosten führt. Bzw. kann bei konstanter Drehzahl der Umwälzpumpe die Gesamtumwälzmenge gesteigert werden, was zu einer höheren Geschwindigkeit und Raum-Zeit-Ausbeute und damit letztlich zu einer Kapazitätserhöhung führt.

Dieses Ergebnis war für den oben beschriebenen Hydrierreaktor bei dem der größte Teil des Reaktionsgemisches im Kreislauf geführt wird, und nur ein kleiner Teil dem Reaktor entnommen und entsprechend die Menge an zu hydrierender Substanz und des Wasserstoffes, die dem Reaktor zugeführt wird, im Vergleich zu der Menge des im Kreis geführten Reaktionsgemisches gering ist, überraschend.

Wie in EP-A-111 133 ausgeführt, ist der Umsatz im oben beschriebenen Reaktortyp dann am größten, wenn die erzeugte Phasengrenzfläche gas/flüssig entlang der Reaktionsstrecke erhalten bleibt. Dies ist dann der Fall, wenn die Vermischung von Gas- und Flüssigphase bei Strömungsgeschwindigkeiten von mindestens 3 m/s stattfindet. Ausserhalb des Hydrierreaktors sind die Strömungsgeschwindigkeiten deutlich kleiner als 3 m/s. In Folge sollte erwartet werden, dass keine Übertragung der Feinverteilung in den Reaktor erfolgen sollte und damit ein verringerter Umsatz einhergehen. Dennoch zeigte es sich nun, dass auch bei einer Vorvermischung von Gas- und Flüssigphase vor dem Hydrierreaktor der Umsatz nicht verringert wird.

Das erfindungsgemäße Verfahren der Vermischung von zu hydrierender Substanz und Wasserstoff kann vorzugsweise so ausgeführt werden, dass die im Mischorgan erzeugten Gasblasen einen maximalen Durchmesser von 2,5mm, besonders bevorzugt von kleiner als 1,5 mm, haben, um einen schnellen Transfer in die Flüssigphase zu ermöglichen.

Mögliche Mischorgane, mit denen diese Gasblasengröße erzielt werden kann, sind zum Beispiel Siebplatten, Fritten, Düsen oder statische Mischer.

Besonders geeignet für das erfindungsgemäße Verfahren ist eine Venturi-Düse. Diese bekannte Vorrichtung hat, verglichen mit anderen Mischorganen, einen niedrigen Druckverlust und ist weitestgehend wartungfrei. In Abhängigkeit von der eingetragenen Energie und dem Volumenstrom wird die Nennweite der Kehle so eingestellt, dass der maximale Gasblasendurchmesser 2,5 mm nicht übersteigt.

Neben der Blasengröße ist auch die Stabilität der Blasen von Bedeutung. Es soll verhindert werden, dass die Blasen koaleszieren und es dadurch zu keiner ausreichenden Verteilung des Wasserstoffes in der Flüssigphase kommt.

Eine besonders bevorzugte Ausführungsform des erfindungsgemäßen Verfahrens ist es daher, die Hydrierung in einem koaleszenzgehemmten System durchzuführen. Unter koaleszenzgehemmten Systemen sind solche Gas/Flüssigsysteme zu verstehen, in denen die Gasblasen, wenn keine äußere Einwirkung vorliegt, ihre Größe beibehalten. Verantwortlich hierfür sind grenzflächenbeeinflussende Werte der Flüssigkeit, wie Zähigkeit und spezifische Oberflächenspannung, so wie die Art des Gases.

Wie in EP-A-221 931 beschrieben, erfüllen die im AO-Verfahren zur Herstellung von Wasserstoffperoxid eingesetzten Arbeitslösungen als Flüssigphase die Bedingungen für ein koaleszenzgehemmtes System dann, wenn der Summenquotient aller Grenzflächenspannungen der beteiligten Komponenten mindestens 16 mN/m erreicht, bevorzugt sind 17 bis 25 mN/m.

Als Gasphase wird in EP-A-221 931 Sauerstoff oder ein Sauerstoff/Stickstoffgemisch beschrieben. Durch einen einfachen Versuch läßt sich auch zeigen, dass Arbeitslösungen und Wasserstoff bzw. ein wasserstoffenthaltendes Gas ein koaleszenzgehenuntes System ausbilden, wenn die oben angegebene Bedingung für den Summenquotienten aller Grenzflächenspannungen der beteiligten Komponenten erfüllt ist. Somit kann bei entsprechender Wahl der Bestandteile des Reaktionssystems und ihrer relativen Mengen sichergestellt werden, daß bei der Vorvermischung von Wasserstoff und Arbeitslösung ein koaleszenzgehemmtes System entsteht und als solches in den Hydrierreaktor gelangt.

Um eine möglichst quantitative Hydrierung zu erzielen, soll der Gasanteil der Vorvermischung aus Wasserstoff und zu hydrierender Substanz bei über 30 Vol%, bevorzugt bei über 40 Vol% liegen. Besonders bevorzugt ist der Bereich zwischen 60 und 80 Vol.%.

Die Aufrechterhaltung eines koaleszenzgehemmten Systems während des Verlaufes der Reaktion wird durch Hydrierreaktoren, die frei von Einbauten sind, die erfahrungsgemäß zu einer Koaleszenz der Gasbläschen führen, begünstigt.

Besonders geeignete Reaktortypen, deren Reaktionsraum, abgesehen vom Verteilerorgan, frei von Einbauten mit Gaszerteilungsfunktion ist, sind insbesondere Rührkessel, Gas-Lift-Reaktoren, Schwebebettreaktoren, oder Schlaufenreaktoren zur Hydrierung im AO-Prozeß zur Herstellung von Wasserstoffperoxid. Das erfindungsgemäße Verfahren ist besonders im oben genannten Prozeß geeignet zur katalytischen Hydrierung von
substituierten Anthrachinonen bzw. Gemischen aus substituierten Anthrachinonen,
deren teil-kernhydrierten alpha- und beta-Tetrahydroderivaten und
Mischungen aus a) und b)
zu den entsprechenden Anthrahydrochinonen und Tetrahydroanthrahydrochinonen.

Verwendung finden vor allem 2-Alkyl-substituierte Anthrachinone, deren Alkylrest 1 bis 8 C-Atome enthalten kann und der linear oder verzweigt sein kann. Beispiele hierfür sind 2-Ethyl-, 2-Amyl- und 2-tert.-Butyl-anthrachinon sowie deren Tetrahydroderivate.

Weitere Verbindungen die vorteilhafter Weise nach dem erfindungsgemäßen Verfahren hydriert werden können, sind Olefine, aromatische und heteroaromatische Ringe, Carbonylverbindungen und Nitrile.

Die zu hydrierende Substanz kann als solche oder in Lösung eingebracht wird. Anthrachinone werden bevorzugt in einem Lösungsmittelgemisch, enthaltend einen Chinonlöser und einen Hydrochinonlöser, gelöst.

Bekannte Chinonlöser sind Benzol, tert-Butylbenzol, tert-Butyltoluol, Trimethylbenzol, polyalkylierte Benzole und Methylnaphthalin.

Bekannte Hydrochinonlöser sind Alkylphosphate, Alkylphosphonate, Nonylalcohole, Alkylcyclohexanolester, N,N-Dialkylcarbonamide, Tetraalkylharnstoffe, N-Alkyl-2-pyrrolidone.

Die erfindungsgemäße Vorvermischung von Wasserstoff und Flüssigphase wird bevorzugt bei der katalytischen Hydrierung von substituierten Anthrachinonen im AO-Verfahren im beschriebenen, einbautenfreien Reaktortyp ausgeführt. Dabei wird die zu hydrierende Substanz, das Hydrierungsprodukt, Wasserstoff und der im Reaktionsgemisch suspendierte Katalysator, im Kreislauf geführt, ein Teil des Hydrierungsproduktes dem Reaktor entnommen und die zu hydrierende Substanz und Wasserstoff der Reaktion zugeführt.

Der entnommene Teil , der das hydrierte Produkt enthält, wird in einem nachgeschalteten Reaktionsschritt oxidiert, wobei Wasserstoffperoxid entsteht und die zu hydrierende Substanz wieder zurückgebildet wird. Das Wasserstoffperoxid wird anschließend extrahiert und die zu hydrierende Substanz wird wieder zurück zur Hydrierung geführt.

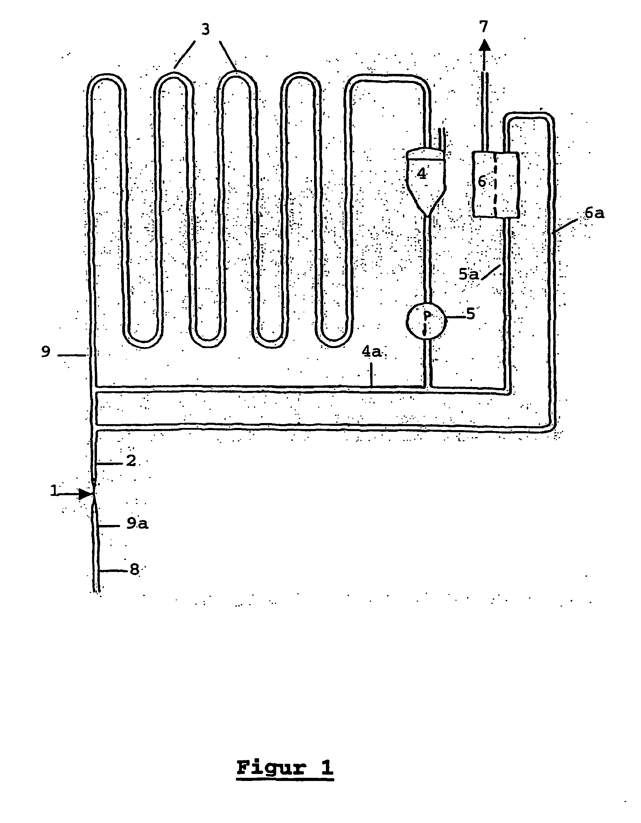

In Fig. 1 ist eine mögliche Ausführungsform eines Hydrierreaktors mit Vorvermischung des Wasserstoffes gezeigt.

Das Dreiphasengemisch 9, enthaltend eine Lösung mit der zu hydrierenden und bereits hydrierte Substanz, Wasserstoff und den suspendierten Hydrierkatalysator, wird, ausgehend von einer Pumpenvorlage 4, über die Leitung 4a, mittels einer Umwälzpumpe 5, durch den Schlaufenreaktor 3 im Kreis geführt. Ein Teilstrom dieser Lösung wird über die Leitung 5a durch ein Filterogan 6 geleitet. Dort wird dieser Strom erneut geteilt: Katalysatorhaltige Lösung wird über die Leitung 6a zurück zum Schlaufenreaktor 3 geführt, während der katalysatorfreie Produktstrom 7 dem Kreislauf entnommen wird und bei der Einleitstelle 8 durch frische katalysatorfreie Lösung 9a, enthaltend die zu hydrierende Substanz, ergänzt wird.

Im erfindungsgemäßen Verfahren wird der Wasserstoff 1 in der bevorzugt als Venturi-Düse ausgelegten Gaseinleitstelle 2 in die katalysatorfreie Flüssigphase 9a dispergiert und erst dann mit den katalysatorhaltigen Teilströmem 4a und 6a vereinigt.

Betriebsversuche in einer AO-Großanlage haben gezeigt, dass der Druckverlust eines Hydrierreaktors wesentlich gesenkt oder, bei konstanter Drehzahl der Umwälzpumpe, die Gesamtumwälzmenge um ca. 30% gesteigert werden konnte. Infolge der erhöhten Umwälzmenge stellte sich ein höheres Katalysator-Konzentrationsprofil ein, so dass die Reaktorkapazität um ca. 15% gesteigert werden konnte.

Wahlweise kann durch Reduzierung der Drehzahl der Umwälzpumpe, falls eine Kapazitätserhöhung nicht beabsichtigt ist, eine Energieeinsparung von ca. 40% errechnet werden.

## Patentansprüche

1. Kontinuierliches Verfahren zur katalytischen Hydrierung, bei der ein Reaktionsgemisch, das die zu hydrierende Substanz, das Hydrierungsprodukt, Wasserstoff und den im Reaktionsgemisch suspendierten Hydrierkätalysator enthält, in einem Reaktor im Kreislauf geführt wird, ein Teil des Hydrierungsproduktes dem Reaktor entnommen wird, und die zu hydrierende Substanz und wasserstoff dem Reaktor zugeführt werden, **dadurch gekennzeichnet, dass** man eine katalysatorfreie die zu hydrierende Substanz enthaltende Flüssigphase vor dem Eintritt in den Reaktor mit wasserstoff vermischt und dieses Gemisch in das katalysatorhaltige Reaktionsgemisch einspeist.

2. Verfahren nach Anspruch 1,**dadurch gekennzeichnet, dass** die Vermischung von zu hydrierender Substanz und Wasserstoff so ausgeführt wird, dass der Durchmesser der erzeugten Gasblasen maximal 2,5 mm, bevorzugt kleiner als 1,5 mm, ist.

3. Verfahren nach Anspruch 1 und 2, **dadurch gekennzeichnet, dass** als Mischorgan eine Venturi-Düse, eine Siebplatte oder Fritte Verwendung findet.

4. Verfahren nach einem der Ansprüche 1-3, **dadurch gekennzeichnet, dass** das System, enthaltend die zu hydrierende Substanz und Wasserstoff, koaleszenzgehemmt-ist.

5. Verfahren nach Anspruch 4, **dadurch gekennzeichnet, dass** man als koaleszenzgehemmte Syteme solche einsetzt, deren Summenquotient aller spezifischen Grenzflächenspannungen der am System beteiligten Komponenten mindestens einen Wert von 16 mN/m erreicht.

6. Verfahren nach einem der Ansprüche 1-5, **dadurch gekennzeichnet, dass** das Gemisch aus Wasserstoff und zu hydrierender Substanz einen Gasanteil von 40 Vol% bis 80 Vol.% besitzt.

7. Verfahren nach einem der Ansprüche 1-6, **dadurch gekennzeichnet, dass** der Reaktor frei von Einbauten ist.

8. Verfahren nach nach einem der Ansprüche 1-7, **dadurch gekennzeichnet, dass** als Reaktor ein Rührkessel, ein Gas-Liftreaktor, ein Schwebebettreaktor oder ein Schlaufenreaktor Verwendung finden.

9. Verfahren nach einem der Ansprüche 1-8, **dadurch gekennzeichnet, dass** die zu hydrierende Substanz ein substituiertes Anthra-chinon oder ein Gemisch von substituierten Anthrachinonen und/oder deren kernhydrierten Tetrahydroderivaten ist.

10. Verfahren nach einem der Ansprüche 1-9, **dadurch gekennzeichnet, dass** die zu hydrierende Substanz als solche oder in Lösung eingebracht wird.

11. Verfahren zur Herstellung von Wasserstoffperoxid nach dem Anthrachinon-Kreisprozess, umfassend eine katalytische Hydrierung, eine Oxidation der hydrierten Arbeitslösung mit Sauerstoff oder einem Sauerstoff enthaltendem Gas, wobei Wasserstoffperoxid und substituiertes Anthrachinon bzw. dessen kernhydriertes Tetrahydroanthrachinon enthaltendes Gemisch erhalten wird und eine Extraktion des Wässerstoffperoxides aus dem Gemisch erhalten nach der Oxidation, **dadurch gekennzeichnet, dass** die Hydrierung gemäß einem der Ansprüche 9 oder 10 durchgeführt wird.

## Claims

1. Continuous catalytic hydrogenation process, in which a reaction mixture containing the substance to be hydrogenated, the hydrogenation product, hydrogen and the hydrogenation catalyst suspended in the reaction mixture is recirculated in a reactor, part of the hydrogenation product is removed from the reactor and the substance to be hydrogenated and hydrogen are fed into the reactor, **characterized in that** a catalyst-free liquid phase containing the substance to be hydrogenated is mixed with hydrogen before entry into the reactor and this mixture is fed into the catalyst-containing reaction mixture.

2. Process according to Claim 1, **characterized in that** the mixing of substance to be hydrogenated and hydrogen is performed in such a way that the diameter of the gas bubbles produced is no more than 2.5 mm, preferably less than 1.5 mm.

3. Process according to Claims 1 and 2, **characterized in that** a Venturi nozzle, a perforated plate or a frit is used as mixing device.

4. Process according to any one of Claims 1-3, **characterized in that** the system containing the substance to be hydrogenated and hydrogen is coalescence-inhibited.

5. Process according to Claim 4, **characterized in that** systems in which the sum quotient of all specific interfacial surface tensions of the components involved in the system reaches a value of at least 16 mN/m are used as the coalescence-inhibited systems.

6. Process according to any one of Claims 1-5, **characterized in that** the mixture of hydrogen and the substance to be hydrogenated has a gas proportion of from 40% by volume to 80% by volume.

7. Process according to any one of Claims 1-6, **characterized in that** the reactor is free from inserts.

8. Process according to any one of Claims 1-7, **characterized in that** a stirred vessel, a gas-lift reactor, a fluidized bed reactor or a loop reactor is used as reactor.

9. Process according to any one of Claims 1-8, **characterized in that** the substance to be hydrogenated is a substituted anthraquinone or a mixture of substituted anthraquinones and/or the ring-hydrogenated tetrahydro derivatives thereof.

10. Process according to any one of Claims 1-9, **characterized in that** the substance to be hydrogenated is introduced as such or in solution.

11. Process for the production of hydrogen peroxide by the anthraquinone cyclic process, comprising a catalytic hydrogenation, an oxidation of the hydrogenated working solution with oxygen or an oxygen-containing gas, with a mixture containing hydrogen peroxide and substituted anthraquinone or corresponding ring-hydrogenated tetrahydroanthraquinone being obtained, and an extraction of the hydrogen peroxide from the mixture obtained after the oxidation, **characterized in that** the hydrogenation is performed according to either Claim 9 or 10.

## Revendications

1. Procédé continu d'hydrogénation catalytique, dans lequel un mélange réactionnel, contenant la substance à hydrogéner, le produit d'hydrogénation, l'hydrogène et le catalyseur d'hydrogénation en suspension dans le mélange réactionnel, est guidé en circuit dans un réacteur, une partie du produit d'hydrogénation est prélevée du réacteur et la substance à hydrogéner et l'hydrogène sont alimentés dans le réacteur, **caractérisé en ce qu'**on mélange une phase liquide exempte de catalyseur, contenant la substance à hydrogéner, avec de l'hydrogène avant l'entrée dans le réacteur et on injecte ce mélange dans le mélange réactionnel contenant le catalyseur.

2. Procédé selon la revendication 1, **caractérisé en ce que** le mélange de la substance à hydrogéner et de l'hydrogène est réalisé de manière telle que le diamètre des bulles de gaz générées est d'au maximum 2,5 mm, de préférence inférieur à 1,5 mm.

3. Procédé selon la revendication 1 et 2, **caractérisé en ce qu'**on utilise, comme organe de mélange, une buse de Venturi, un plateau perforé ou une fritte.

4. Procédé selon l'une quelconque des revendications 1 à 3, **caractérisé en ce que** le système, contenant la substance à hydrogéner et l'hydrogène, est inhibé en coalescence.

5. Procédé selon la revendication 4, **caractérisé en ce qu'**on utilise comme systèmes à coalescence inhibée ceux dont la somme de toutes les tensions superficielles spécifiques des composants participant au système atteint au moins une valeur de 16 mN/m.

6. Procédé selon l'une quelconque des revendications 1 à 5, **caractérisé en ce que** le mélange d'hydrogène et de la substance à hydrogéner possède une proportion de gaz de 40% en volume à 80% en volume.

7. Procédé selon l'une quelconque des revendications 1 à 6, **caractérisé en ce que** le réacteur est exempt de chicanes.

8. Procédé selon l'une quelconque des revendications 1 à 7, **caractérisé en ce qu'**on utilise comme réacteur une cuve agitée, un réacteur à ascension-entraînement par gaz, un réacteur à lit flottant ou un réacteur à boucle.

9. Procédé selon l'une quelconque des revendications 1 à 8, **caractérisé en ce que** la substance à hydrogéner est une anthraquinone substituée ou un mélange d'anthraquinones substituées et/ou de leurs dérivés tétrahydro à noyau hydrogéné.

10. Procédé selon l'une quelconque des revendications 1 à 9, **caractérisé en ce que** la substance à hydrogéner est introduite telle quelle ou en solution.

11. Procédé pour la préparation de peroxyde d'hydrogène selon le procédé en cycle à l'anthraquinone, comprenant une hydrogénation catalytique, une oxydation de la solution de travail hydrogénée avec de l'oxygène ou un gaz contenant de l'oxygène, un mélange contenant du peroxyde d'hydrogène et de l'anthraquinone substituée ou, selon le cas, sa tétrahydroanthraquinone à noyau hydrogéné étant obtenu et une extraction du peroxyde d'hydrogène du mélange obtenu après l'oxydation, **caractérisé en ce que** l'hydrogénation est réalisée selon l'une quelconque des revendications 9 ou 10.
